# EUROPÄISCHE PATENTANMELDUNG

(11) **EP 1 276 201 A2**
(43) Veröffentlichungstag der Anmeldung: **15.01.2003**
(21) Anmeldenummer: 02013836.8
(22) Anmeldetag: 21.06.2002
(51) Int. Cl.: H02H 7/30

(54) **Schutzanordnung und Schutzverfahren für eine Strombahn**

(30) Priorität: 12.07.2001 DE 10133881
(71) Anmelder: SIEMENS AKTIENGESELLSCHAFT, 80333 München (DE)
(72) Erfinder: Englert, Ingo, 97843 Neuhuetten (DE)

(57) **Zusammenfassung**

Um eine einfache und günstige Schutzanordnung (1a-1c) und ein zugehöriges Verfahren für eine Strombahn zu erzielen, ist vorgesehen, zumindest ein erstes und ein zweites Schutzschaltgerät (4a-4i) anzugeben, welche jeweils eine Strommesseinheit (16a-16i), eine Auslöseeinheit (20a-20i) und eine Schaltereinheit (19a-19i) aufweisen, wobei zur Weiterleitung der durch die Strommesseinheit (16a-16i) ermittelten Strommessdaten ein Datenübertragungssystems (25) dient.

## Beschreibung

Die Erfindung bezieht sich auf eine Schutzanordnung und ein Schutzverfahren für eine Strombahn, wobei durch eine Auswerte- und Steuereinheit in Wirkverbindung mit einem ersten und einem zweiten Schutzschaltgerät eine vorgesehene Schutzfunktion gegeben ist bzw. bewirkt wird.

Das erste und das zweite Schutzschaltgerät haben hierbei eine Schutzfunktion gegen einen Überstrom, insbesondere im Sinne einer selektiven Schutzstaffelung. Unter selektiver Schutzstaffelung wird eine Schutzgeräteanordnung mit zumindest zwei in Reihe geschalteten Schutzschaltgeräten verstanden. Diese sind zwischen einem gegen einen Überstrom, z.B. einen Kurzschlussstrom, zu schützenden Betriebsmittel und der zugehörigen Stromquelle in einer Anlage geschaltet.

Die dabei zugrundeliegende Funktionsweise besteht darin, dass in einem Fehlerfall, also bei einem Kurzschluss, nur das vom Fehlerfall betroffene Betriebsmittel über einen Auswahlvorgang, also selektiv, aus der Strombahn herausgetrennt wird, so dass eine Störung möglichst auf den fehlerhaften Anlagenteil begrenzt werden kann. Die Schutzschaltgeräte wirken demnach selektiv und können in der Nieder-, Mittel- und Hochspannungstechnik eingesetzt werden.

Volle Selektivität bedeutet, dass einerseits betriebsmäßige Stromspitzen nicht zum Abschalten führen dürfen und dass andererseits bei ordnungsgemäßer Funktion nur das der Fehlerstelle in Einspeiserichtung am nächsten gelegene Schutzschaltgerät allein auslösen darf. Ferner muss bei Versagen dieses Schutzschaltgeräts das nächste mit ihm in Reihe liegende Schutzschaltgerät ansprechen und auslösen. Dieser funktionelle Zusammenhang ist beispielsweise im Fachbuch Schaltanlagen, Asea Brown Boveri Taschenbuch, 10., neubearbeitete Auflage 1999 XVII, von Bernhard Boehle, Kurt Haneke, Gerd Balzer, ISBN 3-464-48235-9, Cornelsen Verlag, erläutert.

In der Energietechnik halten zudem Kommunikationssysteme zunehmend Einzug, wodurch beispielsweise eine Netzleitstelle über ein Automatisierungssystem mit Schalt- und Schutzgeräten kommunizieren kann. Ein derartiges Kommunikationssystem ist aus dem Aufsatz "Moderne Kommunikation in der Energieautomation", Elektrizitätswirtschaft, Jg. 97, Heft 11/98, von Claus Kern, Thomas Schäffler und Bernhard Nießing, bekannt.

Für die Parametrierung eines derartigen Kommunikationssystems kann ein Verfahren zur Durchgängigen Verwendung einmalig eingegebener Parameter dienen, so dass von der Projektierung bis zur Inbetriebsetzung einer Anlage alle wesentlichen Projektierungsphasen einbezogen werden können. Bekannt ist ein derartiges Verfahren wiedergebender Stand der Technik aus der DE 42 09 168 C2.

Die selektive Schutzstaffelung wird bislang z.B. über eine Strom- und Zeitstaffelung erreicht, wobei diese Ausführungsvariante mit einem hohen Zeit- und Kostenaufwand, insbesondere für den Einsatz von hochwertigen Schutzschaltgeräten, belastet ist. Des Weiteren besteht für ausgewählte Produktreihen im Bereich der Schutzschaltgeräte die Möglichkeit, eine so genannte zeitverkürzte Selektivitäts-Steuerung einzusetzen, die jedoch mit einer aufwendigen Verdrahtung verbunden ist.

Der Erfindung liegt daher die Aufgabe zugrunde, eine Schutzanordnung für eine Strombahn anzugeben, bei der die oben beschriebenen Probleme gelöst werden sollen. Weiterhin soll ein zugehöriges Schutzverfahren angegeben werden.

Diese Aufgabe wird erfindungsgemäß durch die Merkmale des Anspruchs 1 gelöst.

Danach ist vorgesehen, dass die Schutzanordnung für eine Strombahn mit einer Auswerte- und Steuereinheit, und mit zumindest einem ersten und einem zweiten in der Strombahn angeordneten Schutzschaltgerät, welche jeweils eine Strommesseinheit, eine Auslöseeinheit und eine Schaltereinheit aufweisen, versehen ist,
- wobei die Auswerte- und Steuereinheit über ein Datenübertragungssystem zur Signalübertragung mit dem ersten und dem zweiten Schutzschaltgerät verbunden ist,
- wobei das erste Schutzschaltgerät mit dem zweiten Schutzschaltgerät in Reihe geschaltet ist, und
- wobei eine Übertragungseinheit zur Weiterleitung der durch die Strommesseinheit ermittelten Strommessdaten über das Datenübertragungssystem an die Auswerte- und Steuereinheit dient, und
- wobei die Auswerte- und Steuereinheit in einem Auslösefall dazu dient ein Abschaltsignal zu generieren,
- wobei das Abschaltsignal zum Abschalten des von einem Fehlerstrom durchflossenen und einem Fehlerort am nächstliegenden Schutzschaltgeräts dient.

Hierbei ist die selektive Schutzstaffelung durch eine logische Funktion eines Logikbausteins mit einem die Selektivität bewirkenden Algorithmus gestützt. Dieser Logikbaustein in Form einer Auswerte- und Steuereinheit ermöglicht in Verbindung mit einem Datenübertragungssystem einen Datenaustausch zwischen den einzelnen Schutzschaltgeräten. Dadurch kann die so genannte volle Selektivität, unabhängig vom Betriebszustand, wie beispielsweise Trafo- oder Generatorbetrieb, gewährleistet werden.

Von großem Nutzen ist eine derartige Schaltungstechnik insbesondere für elektrotechnische Anlagen in Krankenhäusern, Versammlungsstätten oder ähnlichen Einrichtungen. Darüber hinaus kann eine ggf. bereits vorhandene Infrastruktur eines Bussystems genutzt werden. Aufwendige Berechungen aus Spannung, Leitungswiderstand, Kurzschlussstrom und Auslösecharakteristik zur Dimensionierung können entfallen, so dass eine einfache, kostengünstige und durchgängige Schutzanordnung gegeben ist.

Vorteilhafterweise sind die beiden Schutzschaltgeräte in Abhängigkeit von jeweils einem in einer jeweiligen Speichereinheit abgelegten Schwellwert geschaltet, wodurch ein einfacher Zugriff, auch beispielsweise über eine Fernleitstelle, gegeben ist.

Mit Vorteil ist die Speichereinheit in den Schutzschaltgeräten oder in der Auswerte- und Steuereinheit angeordnet, so dass - je nach Anwendungsfall - eine dezentrale bzw. zentrale Datenverarbeitung stattfinden kann.

In einer weiteren Ausführungsvariante ist bei einem zwischen den beiden Schutzschaltgeräten angeordneten Sicherungselement der jeweilige Schwellwert ober- bzw. unterhalb der Auslösekennlinie des Sicherungselements eingestellt ist. Dadurch wird vorteilhafterweise sichergestellt, dass selbst bei einem nicht an das Datenübertragungssystem gekoppelten Schutzelement die gewünschte Selektivität beibehalten wird.

Zweckmäßigerweise ist die jeweilige Speichereinheit mit einem zusätzlichen Schwellwert für einen Notauslösefall versehen. Somit ist auch bei einer etwaigen Beeinträchtigung des Datenübertragungssystem eine sichere Abschaltung des jeweiligen Schutzschaltgeräts im Fehlerfall gegeben.

Mit Vorteil sind das Schutzschaltgerät, die Strommesseinheit, die Auslöseeinheit, die Schaltereinheit, die Übertragungseinheit, das Datenübertragungssystem, die Auswerte- und Steuereinheit und die Speichereinheit einzeln oder in Kombination redundant ausgeführt. Die damit verbundenen Vorteile ergeben sich aus dem sich gegenseitig überwachenden Pfaden des Datenübertragungssystems und der damit einhergehenden zusätzlichen Sicherheit im Hinblick auf eine sichere Abschaltung des jeweiligen Schutzschaltgeräts im Fehlerfall.

Die Aufgabe wird hinsichtlich des Schutzverfahren für eine Strombahn dadurch gelöst, dass beim Schutzverfahren erfindungsgemäß eine Auswerte- und Steuereinheit, und
- zumindest ein erstes und ein zweites in der Strombahn angeordnetes Schutzschaltgerät, welche jeweils eine Strommesseinheit, eine Auslöseeinheit und eine Schaltereinheit aufweisen, zusammenwirken,
- wobei die Auswerte- und Steuereinheit über ein Datenübertragungssystem zur Signalübertragung mit dem ersten und dem zweiten Schutzschaltgerät verbunden wird,
- wobei das erste Schutzschaltgerät mit dem zweiten Schutzschaltgerät in Reihe geschaltet wird, und
- wobei eine erste Übertragungseinheit die ermittelten Strommessdaten der Strommesseinheit über das Datenübertragungssystem an die Auswerte- und Steuereinheit weiterleitet, und
- wobei die Auswerte- und Steuereinheit in einem Auslösefall ein Abschaltsignal generiert,
- wobei das Abschaltsignal das Abschalten des von einem Fehlerstrom durchflossenen und einem Fehlerort am nächstliegenden Schutzschaltgeräts bewirkt.

Die oben genannten Vorteile beziehen sich sinngemäß auch auf das Verfahren.

Weitere Vorteile und Details der Erfindung werden nachfolgend anhand der Zeichnung dargestellt. Diese dienen zur Vermittlung des grundlegenden erfinderischen Gedankens. Es zeigen grob schematisch:
- FIG 1: eine erste Schutzanordnung mit mehreren Schutzstaffeln für eine mehrpfadige Energieverteilung,
- FIG 2: eine zweite Schutzanordnung mit mehreren Schutzstaffeln für ein Energieverteilung über ein Ring- respektive Maschennetz,
- FIG 3: eine dritte Schutzanordnung mit mehreren Schutzstaffeln und einem Sicherungselement, für eine einpfadige Energieverteilung,
- FIG 4: ein Strom-Zeit-Diagramm für eine Schutzstaffelung mit einem ersten und einem zweiten Schutzschaltgerät, und
- FIG 5: ein Strom-Zeit-Diagramm für eine Schutzstaffelung mit einem Schutzschaltgerät und mit einem Sicherungselement.

Im nachfolgenden Text sind gleiche Teile der Figuren mit gleichen Bezugszeichen oder sinngemäß mit ähnlichen Bezugszeichen versehen.

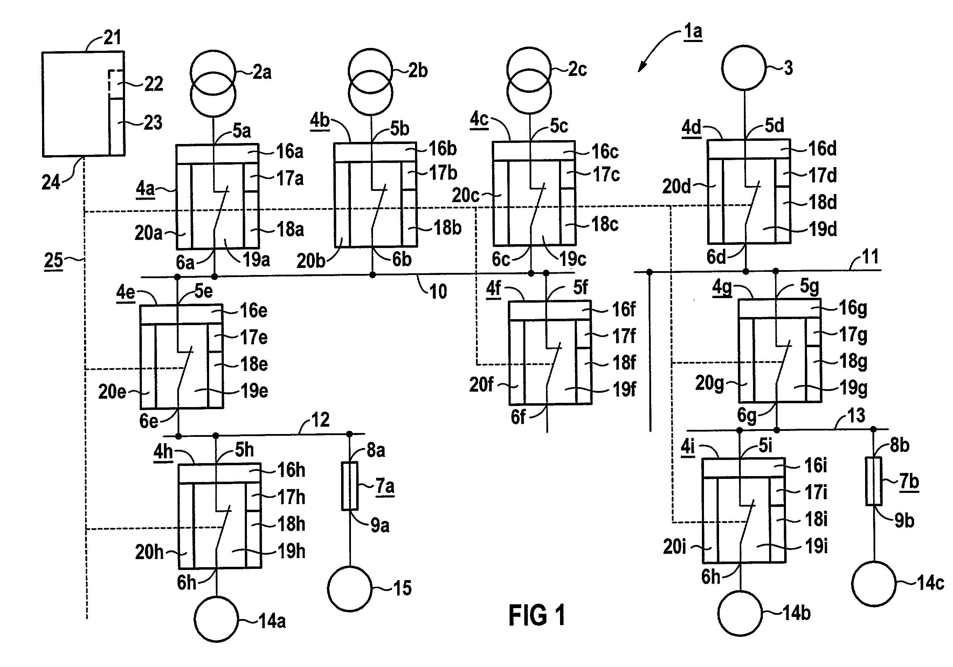

In FIG 1 ist eine erste Schutzanordnung 1a für eine Strombahn, insbesondere für eine mehrpfadige Energieverteilung gezeigt. Die Energieverteilung weist dabei einspeiseseitig Transformatoren 2a,2b,2c und einen Generator 3 auf, die als Energieversorgungsglieder dienen. Im Anschluss an diese Energieversorgungsglieder ist die Schutzanordnung 1a mit mehreren Schutzstaffeln versehen. Die Schutzstaffeln setzen sich abschnittsweise aus mehreren in Reihe geschalteten Schutzschaltgeräten 4a bis 4i zusammen.

Dabei stehen die Transformatoren 2a,2b,2c und der Generator 3 in einer unmittelbaren, elektrisch leitenden Verbindung zu den Eingängen 5a,5b,5c bzw. 5d der Schutzschaltgeräte 4a,4b, 4c bzw. 4d. An den den Eingängen 5a,5b und 5c zugehörigen Ausgängen 6a,6b bzw. 6c der Schutzschaltgeräte 4a,4b bzw. 4c ist ein erster Strompfad 10 angeordnet. Ferner ist am Ausgang 6d des Schutzschaltgeräts 4d ein zweiter Strompfad 11 angeordnet.

Der erste Strompfad 10 führt neben dem Eingang 5e auch auf den Eingang 5f jeweils eines Schutzschaltgeräts 4e bzw. 4f.

Der zweite Strompfad 11 führt hingegen zum einen auf den Eingang 5g eines Schutzschaltgeräts 4g und zum anderen auf den Ausgang 6f des Schutzschaltgeräts 4f. Am Ausgang 6e des Schutzschaltgeräts 4e ist ein dritter Strompfad 12 angeordnet, der in einer elektrisch leitenden Verbindung zu den Eingängen 5h und 8a eines Schutzschaltgeräts 4h bzw. eines Sicherungselements 7a steht.

Verbraucherseitig folgen an den zugehörigen Ausgängen 6h und 9a des Schutzschaltgeräts 4h bzw. des Sicherungselements 7a ein Motor 14a bzw. ein lichterzeugender Verbraucher 15. Am Ausgang 6g des Schutzschaltgeräts 4g ist ein vierter Strompfad 13 angeordnet, der in einer elektrisch leitenden Verbindung mit den Eingängen 5i und 8b eines Schutzschaltgeräts 4i bzw. eines Sicherungselements 7b steht. Verbraucherseitig folgen an den Ausgängen 6i und 9b des Schutzschaltgeräts 4i bzw. des Sicherungselements 7b jeweils ein Motor 14b bzw. 14c. Die Sicherungselemente 7a,7b können dabei in Form von Schmelzsicherungen zum Einsatz kommen.

Die Schutzschaltgeräte 4a bis 4i weisen mehrere Baueinheiten auf, wobei in diesem Ausführungsbeispiel nur jeweils eine Einheit pro Schutzschaltgerät vorgesehen ist. Dazu zählen beispielsweise eine Strommesseinheit 16a bis 16i, eine erste Speichereinheit 17a bis 17i, eine erste Übertragungseinheit 18a bis 18i, eine Schaltereinheit 19a bis 19i und eine Auslöseeinheit 20a bis 20i. Die Schutzanordnung 1a weist zudem eine Auswerte- und Steuereinheit 21 auf, die mit einer optionalen, zweiten Speichereinheit 22 und einer zweiten Übertragungseinheit 23 versehen ist. Die Auswerte- und Steuereinheit 21 weist einen gemeinsamen Ein- und Ausgang 24 auf, an dem ein Datenübertragungssystem 25 angeordnet ist.

Das Datenübertragungssystem 25 steht in Wirkverbindung mit den Schutzschaltgeräten 4a bis 4i und ist je nach Bedarf verzweigt ausgeführt. Das Datenübertragungssystem 25 dient zur Signalübertragung zwischen den einzelnen Schutzschaltgeräten 4a bis 4i. Die Übertragungseinheit 23 leitet, insbesondere im Fehlerfall, die ermittelten Strommessdaten der jeweiligen, ggf. betroffenen, Strommesseinheit 16a bis 16i mittels der entsprechenden ersten Übertragungseinheit 18a bis 18i über das Datenübertragungssystem 25 an die Auswerte- und Steuereinheit 21 weiter. Die Strommessdaten können ggf. auch in der jeweiligen ersten Speichereinheit 22a bis 22i hinterlegt werden.

Die Auswerte- und Steuereinheit 21 generiert in einem Auslösefall ein Abschaltsignal, wobei das Abschaltsignal das Abschalten des von einem Fehlerstrom durchflossenen und einem Fehlerort am nächstliegenden Schutzschaltgeräts bewirkt. Das Abschaltsignal wird mittels der jeweiligen zweiten Übertragungseinheit 23a bis 23i über das Datenübertragungssystem 25 an die entsprechende Auslöseeinheit 20a bis 20i gesendet. Hierbei trennt die betroffene Schaltereinheit 19a bis 19i in Abhängigkeit eines messbaren Kurzschlussstromes und eines einem jeden Schutzschaltgerät zugewiesenen Schwellwerts die zu unterbrechende Strombahn auf. Alternativ kann eine Schutzstaffel auch derart aufgebaut sein, dass die Schutzschaltgeräte aufgrund der hinterlegten Schwellwerte ohne eine zusätzliche Auswerte- und Steuereinheit die Schutzfunktion erfüllen.

Der entsprechende Schwellwert kann sowohl dezentral in der jeweiligen ersten Speichereinheit 17a bis 17i der Schutzschaltgeräte 4a bis 4i, wie auch zentral in der zweiten Speichereinheit 22 abgelegt sein. Die Schwellwerte können mittels einer Fernleittechnik übertragen, verändert und eingespielt werden. Die Schwellwerte stellen dabei individuelle Stromgrenzwerte dar und geben den jeweiligen Betriebsstrom zuzüglich eines Sicherheitsfaktors wieder. Die Schutzanordnung 1a wirkt demnach im Sinne einer selektiven Schutzstaffelung.

Hieraus ergeben sich Vorteile, wie beispielsweise der volle selektive Schutz für Personen, Betriebsmittel und/oder Anlagen, unabhängig von der Leitungsdimensionierung. Eine Anpassung an geänderte Netz- respektive Lastverhältnisse ist ebenso wie eine zentrale Fehlerlokalisierung möglich. Nicht zuletzt kann der mit dieser Topologie einhergehende Standard zweckmäßig zur Nutzung einer vorhandenen Infrastruktur eines Bussystems genutzt werden. Die Nutzung eines so genannten Power-Managements kann hierbei selbstverständlich implementiert werden.

Der zur Aufrechterhaltung der vollen Selektivität benötigte sichere Datenaustausch zwischen der Auswerte- und Steuereinheit 21 und den Schutzschaltgeräten 4a bis 4i ist hierbei durch die vorab genannten Übertragungsmittel gegeben.

Zudem kann die Ermittlung der Einstellwerte der Schutzschaltgeräte 4a bis 4i wie auch der von logischen Verriegelungen automatisch erfolgen. Eine aufwendige Berechnung der Leitungs- und Netzdimensionierung und die Berücksichtigung der ggf. verschiedenen Auslöseverhalten eingesetzter Schutzschaltgeräte, kann somit entfallen.

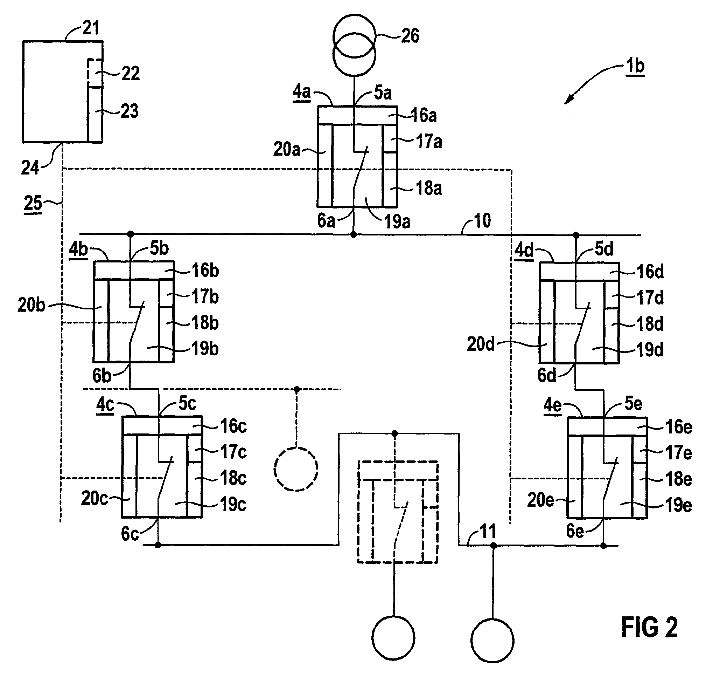

FIG 2 zeigt eine zweite Schutzanordnung 1b für eine Strombahn, insbesondere für ein Ring- respektive Maschennetz. Die Energieverteilung weist dabei einspeiseseitig ein Einspeiseglied 26 in Form eines Transformators oder eines Generators auf. Im Anschluss an das Einspeiseglied 26 ist die Schutzanordnung 1b mit mehreren Schutzstaffeln versehen. Die Schutzstaffeln setzen sich abschnittsweise aus mehreren in Reihe geschalteten Schutzschaltgeräten 4a bis 4e zusammen. Dabei steht das Einspeiseglied 26 in einer unmittelbaren, elektrisch leitenden Verbindung zum Eingang 5a des Schutzschaltgeräts 4a. An den dem Eingang 5a zugehörigen Ausgang 6a des Schutzschaltgeräts 4a ist ein erster Strompfad 10 angeordnet.

Der erste Strompfad 10 führt neben dem Eingang 5b auch auf den Eingang 5d jeweils eines Schutzschaltgeräts 4b bzw. 4d. Die Ausgänge 6b und 6d der Schutzschaltgeräte 4b bzw. 4d führen in einer elektrisch leitenden Verbindung auf die Eingänge 5c und 5e zweier Schutzschaltgeräte 4c bzw. 4e. An den Übergängen der Schutzschaltgeräte 4b zu 4c und 4d zu 4e kann jeweils ein weiterer Strompfad abgezweigt werden, um eine weitere Verteilung für zusätzliche Verbraucher einzurichten. An den Ausgängen 6c und 6e der Schutzschaltgeräte 4c bzw. 4e ist ein gemeinsamer, zweiter Strompfad 11 angeordnet, der in einer elektrisch leitenden Verbindung zu einem Motor 14a und ggf. zu zusätzlichen Verbrauchern steht. Dem Motor 14a wie auch etwaigen weiteren Verbrauchern kann ein Schutzschaltgerät vorgeschaltet sein. Die weitere Topologie und die Funktionsweise der Schutzschaltgeräte und der Schutzanordnung ist analog zur Ausführungsvariante gemäß FIG 1 ausgebildet bzw. gegeben.

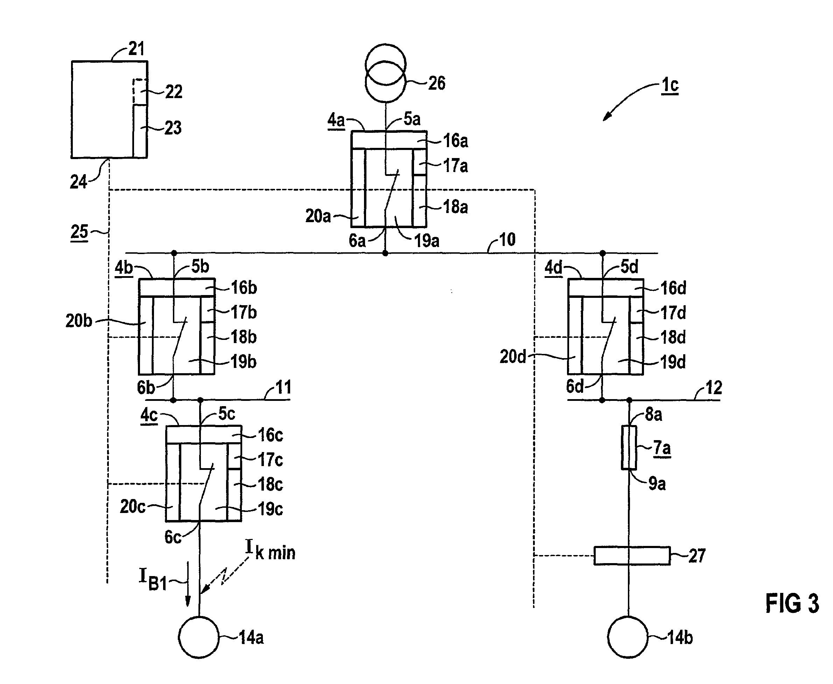

In FIG 3 ist eine dritte Schutzanordnung 1c für eine einpfadige Energieverteilung, gezeigt, die sich von der Schutzanordnung 1b gemäß FIG 2 dadurch unterscheidet, dass an Stelle des Schutzschaltgeräts 4e ein Sicherungselement 7a angeordnet ist. Dem Sicherungselement 7a folgt ein Wandler 27 und schließlich ein Motor 14b. Des Weiteren existiert kein gemeinsamer Strompfad an den Ausgängen 6c und 9a des Schutzschaltgeräts 4c bzw. des Sicherungselements 7a. Der Wandler 27 stellt hierbei ein Bindeglied zwischen dem Sicherungselement 7a und dem Datenübertragungssystem 25 dar, wodurch eine Einbeziehung des Sicherungselements 7a in die Schutzanordnung 1c und folglich ein Datenaustausch ermöglich ist.

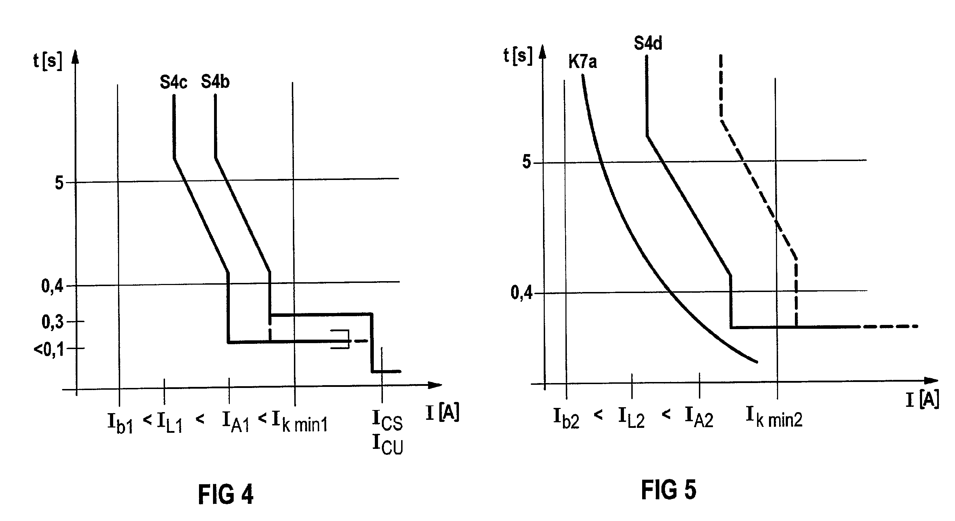

FIG 4 und FIG 5 zeigen ein Strom-Zeit-Diagramm für eine Schutzstaffelung mit einem ersten und einem zweiten Schutzschaltgerät bzw. ein Strom-Zeit-Diagramm für eine Schutzstaffelung mit einem Schutzschaltgerät und mit einem Sicherungselement.

Gemäß FIG 4 ist hierbei eine erste und ein zweite Schwellwertlinie S4b bzw. S4c der Schutzschaltgeräte 4b bzw. 4c im Sinne einer ersten und einer zweiten Stromgrenzwertlinie dargestellt, welche anhand ihrer Lage eine von einem ersten minimalen Kurzschlussstrom I_{K min1} und von einem ersten Betriebsstrom I_{B1} abhängige Schutzstaffelung erkennen lassen. Der Betriebsstrom I_{B1} gibt dabei den tatsächlich fließenden Strom an. Der minimale Kurzschlussstrom I_{K min1} ist der berechnete Strom, der am Ende einer zu schützenden Strombahn wirksam ist.

Im Normalbetrieb fließt der erste Betriebsstrom I_{B1} eines Verbrauchers, z.B. des Motors 14a gemäß FIG 3, über das Schutzschaltgerät 4c und über das Schutzschaltgerät 4b. Die zugehörige Auslöseinheit 20c des Schutzschaltgeräts 4c muss demnach auf einen höheren Schwellwert im Vergleich zum Betriebsstrom I_{B1} eingestellt sein, um einer ungewollten Abschaltung des Verbrauchers vorzubeugen.

Dieser Schwellwert wird auch als erster Einstellstrom I_{E1} einer Auslöseeinheit für einen Kurzschlussfall bezeichnet. Sofern am zweiten Strompfad 11 weitere Verbraucher angeschlossen sind, muss für die Bestimmung der zugehörigen ersten Schwellwertlinie S4b und für die damit verbundene Einstellung der Auslöseeinheit 20b ebenfalls ein entsprechend höherer Wert eingestellt sein. Dieser Wert wird als Auslösestrom I_{A} bezeichnet und dient hierbei als Auslöseschwelle. Der Auslösestrom I_{A} sollte bei Spannungen unter 1000 V um ca. 20 bis 25% unter dem berechneten minimalen Kurzschlussstrom I_{K min1} liegen. Ggf. kann auch ein Auslösestrom und eine -schwelle für einen Überlastfall bestimmt werden, insbesondere für eine motorische Last, die einen Anlaufstrom aufweist, welcher ungefähr dem fünffachen Nennstrom entspricht.

Die Einstellwerte können manuell, auf Grund von Leistungsvorgaben, ermittelt und einmalig eingestellt werden. Eine automatische Ermittlung, Berechnung, Einstellung und auch Anpassung der vorab aufgeführten Einstellwerte könnte zudem unter Zuhilfenahme eines in einem Programm erfassten Algorithmus erfolgen. Durch eine Übermittlung aufgenommener Daten mittels einer Übertragungseinheit und eines Datenübertragungssystems ist die Möglichkeit gegeben, die tatsächlich während des Betriebes auftretenden Betriebsströme zu messen, auszuwerten und mit den eingestellten Schwellwerten zu vergleichen.

Die Schwellwerte können dann ggf. automatisch an die jeweilige Bedarfssituation angepasst werden. Darüber hinaus ist es möglich dem Betreiber einer derartig geschützten Anlage einen generierten Hinweis zukommen zu lassen. Demzufolge kann sowohl von einer automatischen Ermittlung und Parametrierung als auch von einer dynamischen Überprüfung und Anpassung der Einstellwerte und der Logikfunktionen während des Betriebes ausgegangen werden. Von einem hohen Kosten-, Geräte- und Zeiteinsatz kann demzufolge vorteilhafterweise abgesehen werden.

Die Berechnung der Einstellwerte kann dadurch wesentlich vereinfacht werden, dass der dem Auslösestrom I_{A} zugehörige Schwellwert mit einem definierten Sicherheitsfaktor versehen ist. Der Sicherheitsfaktor kann dabei so bemessen sein, dass der Schwellwert beispielsweise 30% über dem Betriebsstrom liegt. Als weitere Voraussetzung zur Berechnung der Einstellwerte muss die maximale Impedanz am Ende des zu schützenden Strompfades so klein sein, dass der im Fehlerfall auftretende Kurzschlussstrom I_{K min1} nur über dem zugehörigen minimalen Auslösestrom I_{A} und dem größtmöglichen Betriebsstrom I_{B1} liegt.

Im Falle eines Kurzschlusses nahe des Verbrauchers, fließt über beide Schutzschaltgeräte 4c und 4b der gleiche Kurzschlussstrom I_{K min1}. Gemäß der in der FIG 4 schematisch gezeigten Schwellwertlinien S4c und S4b, insbesondere des gestrichelt dargestellten Abzweigs der Schwellwertlinie S4b ist erkennbar, dass beide Schutzschaltgeräte 4c und 4b zum gleichen Zeitpunkt auslösen und abschalten.

Mittels der Auswerte- und Steuereinheit 21 und den damit einhergehenden Funktionen des integrierten Logikbausteins, kann eine gleichzeitige Abschaltung der betroffenen Schutzschaltgeräte 4c und 4b vermieden werden. Die maßgebliche Abschaltzeit liegt bei < 0,1s. Dieser zeitliche Verzug ist durch die Kommunikation, durch die Datenübertragung, durch die Auswertung und durch die Schalterkinematik bedingt. Eine weitere relevante Abschaltzeit von 0,3s deckt einen Notauslösefall, wie beispielsweise bei einem Ausfall des Datenübertragungssystems 25, ab. Im Personenschutzbereich kommen, je nach Einsatzort und Vorschrift, u.a. Abschaltzeiten von ≤ 5s zum tragen.

Mit der Unterstützung des Datenübertragungssystems 25, welches topologisch günstig aufgebaut ist, schaltet das Schutzschaltgerät 4c gemäß FIG 3 im Kurzschlussfall den Verbraucher innerhalb von 0,1s frei. Das Schutzschaltgerät 4b gemäß FIG 3 wird über ein dezentrales oder über ein zentrales Signal blockiert, so dass keine Auslösung und/oder Abschaltung innerhalb von 0,1s stattfindet. Die Funktion der dritten Schutzanordnung 1c ist dabei nicht von Kennlinien einzelner Schutzschaltgeräte abhängig, sondern wirkt über definierte Schwellwerte und eines damit in Verbindung stehenden Logikbausteins.

Sofern eine Störung an der Auswerte- und Steuereinheit 21 oder am Datenübertragungssystem 25 vorliegt, so dass das Schutzschaltgerät 4c nicht innerhalb der vorgesehenen 0,1s auslösen kann, wird das Schutzschaltgerät 4b aktiviert. Eine Abschaltung erfolgt dann, je nach Länderspezifikation, Vorschrift und Spannung, beispielsweise innerhalb von 0,3s, wodurch der Personenschutz dennoch sichergestellt ist. Somit können bei einem Strompfad oder einem Energienetz Fehlerund/oder Störungsquellen innerhalb von 0,1s respektive innerhalb von 0,3s freigeschaltet werden.

Darüber hinaus können Fehlerquellen, die in einem bestimmten Bereich eines Strompfades, insbesondere z.B. zwischen den Schutzschaltgeräten 4b und 4c auftreten, unverzögert vom Schutzschaltgerät 4b abgeschaltet werden. Die Auslösung des Schaltgeräts 4b erfolgt dabei durch eine Überschreitung eines vorab festgelegten Schwellwerts. Dieser Schwellwert ist im allgemeinen ein Stromgrenzwert, der mit einem Programm ermittelt wird. Dieses Programm weist einen Algorithmus auf, der prinzipiell in der Art eines Algorithmus aus der Distanzschutztechnik wirkt. Vorteilhaft ist hierbei, dass kostenintensive und komplexe Geräte jedoch nicht benötigt werden, da anhand einer der Inbetriebsetzung der Schutzanordnung vorausgehenden Berechnung, die relevanten Parameter ermittelt werden können. In diesem Fall wird das Datenübertragungssystem 25 nicht benötigt.

Ein Großteil eventuell auftretender Fehler oder Störungen führt demnach verzögerungsfrei zu einer zielgerichteten Abschaltung. Lediglich nicht eindeutig bestimmbare Fehler, bei denen sich auf Grund einer zu geringen Länge des entsprechenden Strompfades, auftretende Kurzschlussströme an den Schutzschaltgeräten 4b und 4c überschneiden, werden mit einer Verzögerung von 0,1s über die selektive Schutzstaffelung abgeschaltet. Ein nicht eindeutig bestimmbarer Fehler liegt vor, sofern dieser kurz vor oder kurz nach dem Schutzschaltgerät 4c auftritt. Für derartige Fehlerkonstellationen ist die Schutzanordnung 1c gemäß FIG 3 erforderlich, um die Funktion der selektiven Schutzstaffelung und eine Abschaltzeit von unter 0,1s zu gewährleisten.

Wesentliche Vorteile ergeben sich aus der innerhalb von 0,1s möglichen Freischaltung von Fehlerquellen, einer einheitlichen Gerätetechnik und der automatischen und selektiven Ermittlung der Fehlerorte, so dass je nach Bedarf eine Schnellabschaltung mit und ohne Unterstützung des Datenübertragungssystems 25 erfolgen kann.

Alternativ zu der vorab aufgezeigten Funktionsweise, kann aus wirtschaftlichen und/oder technischen Gründen von einer Schutzanordnung mit voller Selektivität abgesehen werden. Eine kostengünstige Lösung bietet eine Schutzanordnung, bei der das Prinzip des so genannten Back-up-Schutzes Verwendung findet. Hierbei können vor dem entsprechenden Schutzschaltgerät strombegrenzende Schutzeinrichtungen, wie z.B. ein Sicherungselement, ein Leistungsschalter vom Typ MCCB (Molded Case Circuit Breaker) oder auch ein Leitungsschutzschalter vom Typ MCB (Miniature Circuit Breaker) eingesetzt werden. Beim MCCB handelt es sich um einen Leistungsschalter in Kompaktbauweise, wobei ein zugehöriges Gehäuse aus Formstoff ist.

Diese Schutzschaltgeräte können einen im Fehlerfall fließenden Kurzschlussstrom derart schnell abschalten, dass sowohl die durchgelassene Energie - Produkt aus Strom zum Quadrat x Zeit - als auch der Durchlassstrom begrenzt werden. Ein Schutzschaltgerät, das dem nächsten Schutzschaltgerät vorgeschaltet ist, dient diesem somit zur Begrenzung unzulässig hoher Belastungen eines Kurzschlussstromes. Für die Auswahl nachfolgend angeordneter Schutzschaltgeräte besteht demnach die Möglichkeit, eine entsprechend geringere Kurzschlussstrombelastung zugrundezulegen.

In der Praxis bedeutet dies, dass im Falle eines Kurzschlusses und einem aus diesem resultierenden, bestimmten Kurzschlussstrom hinter einem nachgeschalteten Schutzschaltgerät, eine Auslösung und Abschaltung des vor- und des nachgeschalteten Schutzschaltgeräts oder nur des schnelleren, vorgeschalteten Schutzschaltgeräts erfolgt. Ein in einer ersten Schutzanordnung eingesetzter Back-up-Schutz und ein in einer zweiten Schutzanordnung zum Tragen kommender Schutz durch eine Schutzstaffelung mit voller Selektivität, schließen sich gegenseitig aus.

Bei der Anwendung des Back-up-Schutz Prinzips, kann in einem Fehlerfall zwischen einem Verbraucher und einem Schutzschaltgerät auf Grund eines unbeeinflussten, maximalen Kurzschlussstromes eine Auslösung und Abschaltung durch das dadurch blockierte Schutzschaltgerät verhindert sein. Dies ist der Fall, sofern der maximale Kurzschlussstrom größer ist, als das so genannte Bemessungs-Grenz-Kurzschlussausschaltvermögen I_{CU} und als das so genannte Bemessungs-Betriebs-Kurzschlussausschaltvermögen I_{CS} des betroffenen Schutzschaltgeräts.

Der unzulässig hohe Kurzschlussstrom könnte zwar über die Schaltkontakte des Schutzschaltgeräts fließen, eine Abschaltung ist jedoch nicht erforderlich. Die Abschaltung wird von einem vorgeschalteten Schutzschaltgerät übernommen. Dabei muss sichergestellt sein, dass die Durchlassenergie des vorgeschalteten Schutzschaltgeräts kleiner ist als die zulässige Durchlassenergie des entsprechend nachgeschalteten Schutzschaltgeräts. Die dynamische Beanspruchung darf jedoch die zulässigen Grenzwerte des vorgeschalteten Schutzschaltgeräts nicht überschreiten. Diese Voraussetzungen können auf Grund vorliegender Daten der Schutzschaltgeräte und der berechneten Kurzschlusswerte sichergestellt und optimal aufeinander abgestimmt werden.

Gemäß FIG 5 ist hierbei eine dritte Schwellwertlinie S4d des Schutzschaltgeräts 4d gemäß FIG 3 im Sinne einer Stromgrenzwertelinie und eine Auslösekennlinie K7a eines Sicherungselements 7a gemäß FIG 3 dargestellt, welche anhand ihrer Lage eine von einem zweiten minimalen Kurzschlussstrom I_{K min2} und von einem zweiten Betriebsstrom I_{B2} abhängige Schutzstaffelung erkennen lassen. Der Betriebsstrom I_{B2} gibt dabei den tatsächlich fließenden Strom an. Der minimale Kurzschlussstrom I_{K min2} ist der berechnete Strom, der am Ende einer zu schützenden Strombahn wirksam ist. Maßgeblich ist in diesem Zusammenhang ein am zu schützenden Gerät oder Verbraucher wirksamwerdender maximaler Kurzschlussstrom.

Der diesem Schutzbereich der Schutzanordnung 1c gemäß FIG 3 zugehörige zweiter Einstellstrom I_{E2} der entsprechenden Auslöseeinheit kann vorteilhafterweise programmgestützt berechnet werden. Eine gestrichelt dargestellte und zur Schwellwertlinie S4d parallel verlaufende Schwellwertlinie, verdeutlicht hierbei die Möglichkeit einer Variierung. Im Normalbetrieb fließt der Betriebsstrom I_{B2} eines Verbrauchers, z.B. des Motors 14b gemäß FIG 3, über das Schutzschaltgerät 4d und über das Sicherungselement 7a.

Sicherungsbehaftete Schutzanordnungen funktionieren prinzipiell ebenso wie die vorab beschriebenen sicherungslosen Schutzanordnungen. Zu beachten ist hierbei, dass die Auslösekennlinie K7a des Sicherungselements 7a keine Einstellmöglichkeit hinsichtlich seines Auslöseverhaltens bietet. Um dennoch ein selektives Verhalten der gesamten Schutzanordnung zu gewährleisten, muss das Auslöseverhalten des Sicherungselements 7a berücksichtigt werden. Zu beachten ist hierbei u.a. auch der Schwellwert, der zur Auslösung des Schutzschaltgeräts 4d bezüglich der Auslösekennlinie K7a strom- und zeitabhängig angepasst werden muss. Um die Selektivitätsgrenzen zu optimieren, kann auch herstellerspezifisches Produktwissen herangezogen werden.

Der Gegenstand der Erfindung ist auf die Strombahn in Form eines Leitungszweigs oder eines Strahlennetzes oder eines Ring- oder Maschennetzes anwendbar, so dass die Schutzanordnung und das zugehörige Schutzverfahren für eine Vielzahl von zu schützenden Leitungsnetzen ausgelegt werden kann. Durch einen Vergleich der jeweiligen Impedanzverhältnisse und einem Vergleich der aktuellen Kurzschlussstromanteile kann im Fehlerfall mittels einer definierbaren Funktion eines Logikbausteins, mit einem die Selektivität bewirkenden Algorithmus, der Fehlerort bestimmt werden.

Wesentlicher Gedanke der vorliegenden Idee ist es, in Abhängigkeit eines messbaren Kurzschlussstromes und eines einem jeden Schutzschaltgerät zugewiesenen Schwellwerts präzise den Fehlerort zu ermitteln, wobei ein jedes Schutzschaltgerät einen Messpunkt darstellt. Dadurch ist es möglich, dass das dem Fehlerort nächstliegende Schutzschaltgerät gezielt und ausgewählt, also selektiv, über ein Abschaltsignal der Auswerteund Steuereinheit 21, welche eine Logikeinheit darstellt, abgeschaltet werden kann. Alle Schutzschaltgeräte können demnach unabhängig von einem selektiven Schutzstaffelzeitwert angesteuert und abgeschaltet werden.

## Patentansprüche

1. Schutzanordnung (1a-1c) für eine Strombahn, mit einer Auswerte- und Steuereinheit (21), und mit zumindest einem ersten und einem zweiten in der Strombahn angeordneten Schutzschaltgerät (4a-4i), welche jeweils eine Strommesseinheit (16a-16i), eine Auslöseeinheit (20a-20i) und eine Schaltereinheit (19a-19i) aufweisen,
- wobei die Auswerte- und Steuereinheit (21) über ein Datenübertragungssystem (25) zur Signalübertragung mit dem ersten und dem zweiten Schutzschaltgerät (4a-4i) verbunden ist,
- wobei das erste Schutzschaltgerät mit dem zweiten Schutzschaltgerät (4a-4i) in Reihe geschaltet ist, und
- wobei eine erste Übertragungseinheit (18a-18i) zur Weiterleitung der durch die Strommesseinheit (16a-16i) ermittelten Strommessdaten über das Datenübertragungssystem (25) an die Auswerte- und Steuereinheit (21) dient, und
- wobei die Auswerte- und Steuereinheit (21) in einem Auslösefall dazu dient ein Abschaltsignal zu generieren,
- wobei das Abschaltsignal zum Abschalten des von einem Fehlerstrom durchflossenen und einem Fehlerort am nächstliegenden Schutzschaltgeräts (4a-4i) dient.

2. Schutzanordnung nach Anspruch 1,
wobei die beiden Schutzschaltgeräte (4a-4i) in Abhängigkeit von jeweils einem in einer jeweiligen Speichereinheit (17a-17i, 22) abgelegten Schwellwert geschaltet sind.

3. Schutzanordnung nach Anspruch 1 oder 2,
wobei die Speichereinheit (17a-17i, 22) in den Schutzschaltgeräten (4a-4i) oder in der Auswerte- und Steuereinheit (21) angeordnet ist.

4. Schutzanordnung nach Anspruch 1,2 oder 3,
wobei bei einem zwischen den beiden Schutzschaltgeräten (4a-4i) angeordneten Sicherungselement (7a,7b) der jeweilige Schwellwert ober- bzw. unterhalb der Auslösekennlinie des Sicherungselements (7a,7b) eingestellt ist.

5. Schutzanordnung nach einem der Ansprüche 1 bis 4,
wobei die jeweilige Speichereinheit (17a-17i, 22) mit einem zusätzlichen Schwellwert für einen Notauslösefall versehen ist.

6. Schutzanordnung nach einem der vorhergehenden Ansprüche,
wobei das Schutzschaltgerät (4a-4i), die Strommesseinheit (16a-16i), die Auslöseeinheit (20a-20i), die Schaltereinheit 19a-19i), die Übertragungseinheit (18a-18i, 23), das Datenübertragungssystem (25), die Auswerte- und Steuereinheit (21) und die Speichereinheit (17a-17i, 22) einzeln oder in Kombination redundant ausgeführt sind.

7. Schutzverfahren für eine Strombahn, wobei eine Auswerteund Steuereinheit (21), und zumindest ein erstes und ein zweites in der Strombahn angeordnetes Schutzschaltgerät (4a-4i), welche jeweils eine Strommesseinheit (16a-16i), eine Auslöseeinheit (20a-20i) und eine Schaltereinheit (19a-19i) aufweisen, zusammenwirken,
- wobei die Auswerte- und Steuereinheit (21) über ein Datenübertragungssystem (25) zur Signalübertragung mit dem ersten und dem zweiten Schutzschaltgerät (4a-4i) verbunden wird,
- wobei das erste Schutzschaltgerät mit dem zweiten Schutzschaltgerät (4a-4i) in Reihe geschaltet wird, und
- wobei eine erste Übertragungseinheit (18a-18i) die ermittelten Strommessdaten der Strommesseinheit (16a-16i) über das Datenübertragungssystem (25) an die Auswerte- und Steuereinheit (21) weiterleitet, und
- wobei die Auswerte- und Steuereinheit (21) in einem Auslösefall ein Abschaltsignal generiert,
- wobei das Abschaltsignal das Abschalten des von einem Fehlerstrom durchflossenen und einem Fehlerort am nächstliegenden Schutzschaltgeräts (4a-4i) bewirkt.
